# EUROPEAN PATENT APPLICATION

(11) **EP 1 486 890 A2**
(43) Date of publication of application: **15.12.2004**
(21) Application number: 04013743.2
(22) Date of filing: 11.06.2004
(51) Int. Cl.: G06F 17/30

(54) **Context association system for computer system architecture**

(30) Priority: 13.06.2003 US 461119
(71) Applicant: MICROSOFT CORPORATION, Redmond, WA 98052 (US)
(72) Inventor: Turski, Andrzej, Redmond, Washington 98053 (US); Marcjan, Cezary, Redmond, WA 98052 (US)
(74) Representative: Grünecker, Kinkeldey, Stockmair & Schwanhäusser Anwaltssozietät

(57) **Abstract**

An automatic context association system includes a context association schema for representing context associations between objects. The schema comprises a series of tables, including association tables with type-independent entries to support the association of objects of different types, and object tables that define the various objects. The schema supports the observation of user interaction with various system objects, including documents, photos, web pages, and interaction with other people, in order to find and utilize meaningful associations between them.

## Description

### Technical Field

The present invention relates to a context association system that identifies associations between computer objects and, in particular, to a context association schema for representing such associations.

### Background and Summary

When they were originally designed, personal computers were commonly used for just a relatively narrow range of applications. Computers, including portable and hand-held computing devices, are now used for a wide variety of applications and communication formats. As a result, computer users currently must organize much more information, as well as different types of information, than when computers were originally designed.

Conventional computer file systems force users to use and remember arbitrary, out-of-context filing structures, including file names, hierarchical directory structures, etc. In contrast, innate human memory works by association so that events are often remembered as happening in relationship to other events. With the significant numbers of computer files and computer information that many users interact with, conventional computer filing structures and organizations can make it difficult or impossible for users to find and access computer information they previously worked with or used.

Likewise, current communication and member directory services use static, user generated information to organize contact information. People or contacts tend to be organized alphabetically or according to file hierarchies. For example, in member directory services people are commonly organized according to formal, organizational hierarchical structures. However, many relationships and groups are much more dynamic than formal, organizational hierarchical structures and people do not intuitively arrange their contacts alphabetically or according to topical hierarchies.

Accordingly, an automatic context association system has been developed to identify associations between computer objects. The context association system provides access to computer files, documents, contacts, etc. (i.e., "objects) based upon contextual associations that are determined automatically, thereby accommodating the association basis on which innate human memory works.

The present invention provides for an automatic context association system a context association schema for representing context associations between objects. The schema comprises a series of tables, including association tables with type-independent entries to support the association of objects of different types, and object tables that define the various objects. The schema supports the observation of user interaction with various system objects, including documents, photos, web pages, and interaction with other people, in order to find and utilize meaningful associations between them.

Additional objects and advantages of the present invention will be apparent from the detailed description of the preferred embodiment thereof, which proceeds with reference to the accompanying drawings.

### Brief Description of the Drawings

Fig. 1 is a functional block diagram of an automatic context association system that automatically determines context associations between user computer activities, computer objects (e.g., files, contacts, etc.), and other events.

Fig. 2 is a detailed block diagram of one implementation of a data collection system in the context association system of Fig. 1.

Fig. 3 is a schematic block diagram of an automatic context association schema in accordance with the present invention.

Fig. 4 is a schematic diagram of an objects type table that is optionally included in context association schema.

Fig. 5 is a schematic block diagram of a simplified automatic context association schema in accordance with the present invention.

Fig. 6 is a block diagram of an association cache of objects and associations for improving performance.

Fig. 7 is block diagram of the association cache of Fig.6 illustrating its operation in greater detail.

### Detailed Description of Preferred Embodiments

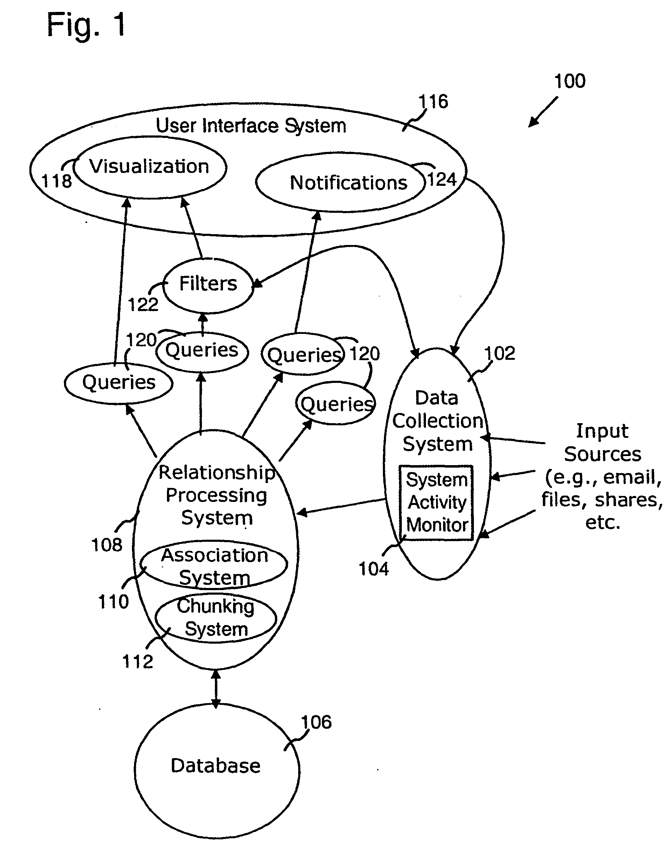

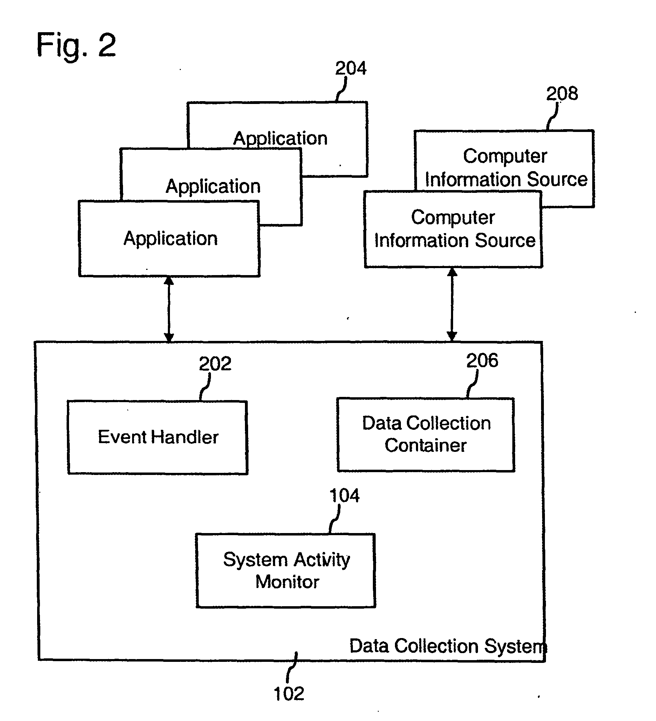

The invention includes an automatic context association schema or data structure having a series of tables stored in a computer readable medium. The data schema supports the observation of user interaction with various computer system objects that include documents, photos, web pages, and interaction with other people in order to establish meaningful associations therebetween. Such user interactions, and the data schema relating to them, may be used in an automatic context association system of the type described with reference to Figs. 1 and 2. It will be appreciated, however, that the data schema of the present invention could alternatively be employed in other systems that establish associations between user interactions.

Fig. 1 is a functional block diagram of an automatic context association system 100 that automatically determines context associations between user computer activities, computer objects (e.g., files, contacts, etc.), and other events. The context associations allow context association system 100 to provide users with automatic access to related computer files, contacts, and information (referred to generally as objects).

As described below, context associations between the objects may include similarities between them and their importance. The importance of and similarities between objects may be determined from user computer interactions with the objects. The user computer interactions may occur on a conventional desktop or laptop computer, or any other user-operated computing device such as a handheld computer, a digital cellular telephone, etc. For purposes of simplicity, these types of devices are referred to herein generally as computers. Context association system 100 may be implemented as software that is stored on and executed by one or more such computers.

Context association system 100 includes a data collection system 102 that collects data relating to user computer activities, computer actions, interactions between the user and various computer objects (e.g., applications, files, communications, etc.), and other events. For example, data collection system 102 may collect data relating to computer system events (e.g., the operation of applications or other software elements, various operations on computer files, sharing of computer data or other objects, etc.) computer communications (e.g., email communications, instant messaging communications, etc.), and external data (e.g., news, events, etc.)

In one implementation, data collection system 102 may include a system activity monitor 104, for example, that monitors user activity on a user-operated computer (not shown). System activity monitor 104 may be implemented as a computer program to which other applications, or the operating system, provide information of user computer activities, such as search queries, the opening or modification of a document or other file, etc. For example, while objects may exhibit many properties, searches performed by a user and the search results can indicate which properties are most important for the user. For each such activity, system activity monitor 104 creates or adds to a record of information (sometimes called "metadata") that is stored in a computer system database 106.

For example, system activity monitor 104 may include a universal input activity monitor that provides a single entry point for all user interactions with the computer, or at least specified user interactions with the computer. In this universal input implementation, system activity monitor 104 may determine and store as metadata in computer system database 106 any or all of the following: input method data (e.g., text, speech, mouse, etc.), input language data (English, Chinese, etc.), input mode data (e.g., dictation or typed command), input assistance data (e.g., typed word completion, command guessing, etc.), input feedback data (e.g., whether the computer needs additional information, corrections of wrong guesses by the computer, etc.), etc. For instance, if a user copies or stores a picture in a web browser, system activity monitor 104 could store the network address (e.g., Uniform Resource Locator, URL) of the source page, as well as the URL of the image itself, as metadata in computer system database 106.

Computer system database 106 stores information (e.g., "metadata'') about computer files stored on and activities carried out on a computer. The metadata may include conventional information, such as is conventional for computer-generated documents, including when the file was created, who created it, and a modification history. Also, some types of computer file types may have specific metadata fields that are not applicable to other file types. For instance, the metadata fields for a photo file type may include the size of the image, where the picture was taken, who took it, who is in it, etc. In one implementation, new metadata fields can be added to database system 106 to accommodate new file types or to store new information about an existing file type.

Table 1A lists exemplary information that may obtained by system activity monitor 104 and stored in computer system database 106. With regard to the various computer files and computer information (referred to collectively as objects) a computer user might interact with, system activity monitor 104 may collect data relating to any or all of the creator/author of the object, the type of the object, any pointer to the object (if available), activation events, object size, etc. For example, system activity monitor 104 may obtain the information about the objects with which a computer user interacts, determine whether the objects are new or unique relative to other objects listed in computer system database 106 (e.g., based upon a unique object identifier), and aggregate or store the activities in computer system database 106 in association with the unique object identifier of the object.

**Table 1A -**

| ***Data Collection and Analysis*** | | |
|---|---|---|
| **Constructs** | **Operationalization** | |
| | **Data Collecting** | **Data Processing** |
| **Objects Users Interact With** | | |
| ***General*** | creator/author of object, type of object, pointer to object if it still exists, activation events, object size | get information about objects, determine if new/unique & aggregate events at level of unique object ID |
| ***People*** | | |
| people in user's email | email client aliases | |
| people in user's contact list | contact list files | |
| people users IM, Chat with | buddy list email aliases | |
| ***Communications*** | | |
| Emails | email events (open, close), email addresses | |
| phone messages | phone message events (open, close), email alias | |
| instant messages | instant message (IM) session events (open, close), people | |
| chat messages | chat session events | |
| ***Files*** | | |
| any file created, opened, saved, played, sent, etc. | file names, place in directory | |
| ***Web items*** | | |
| web pages | URLs | |
| streaming items played | URLs | |
| ***Notifications*** | type of notification, response notification | |
| ***Applications*** | pointer to application | |

The objects with which the computer user interacts may be associated with other people, communications with other people, computer files, network or Web items, computer system notifications, and applications run on or accessible by the computer. System activity monitor 104 can obtain and store in computer system database 106 for each of the listed types of exemplary information.

Context association system 100 includes a relationship processing system 108 that determine one or more relationships between objects or metadata obtained by data collection system 102 or stored in computer system database 106. In one exemplary implementation, relationship processing system 108 includes a similarity or association system 110 that determines a degree of similarity or association between at least a pair of computer files or objects. Similarity or the degree of association may be represented, for example, as a numeric value between 0 and 1, where 1 would be identity between objects and 0 would indicate they are completely unrelated. Association system 110 may be implemented as one or more programs that, for a given target file and a collection of other files, return a similarity ranking between them.

It will be appreciated that different types of documents, files, or objects can have different types of similarity. For instance, two photos can look similar, could be taken at similar times, could be of a similar person, place, or event, could be the same color, could have been sent to the same people or printed together, could be parts of the same photo (e.g., one could have been cut from the other), etc. Table 1B lists exemplary associations or similarities that association system 110 may identify and store in computer system database 106. As indicated, the associations or similarities may relate to objects or files having shared content, occurring at similar times or similar computer locations (e.g., computer, directory, etc.), being sent to or received from a common person, are be linked together.

**Table 1B -**

| ***Data Collection and Analysis*** | | |
|---|---|---|
| **Constructs** | **Operationalization** | |
| | **Data Collecting** | **Data Processing** |
| **Context: Associations between Objects** | | |
| ***Having shared content*** | | |
| | cut/paste event, insert event, objects | |
| | saved as event, objects | |
| ***Occurring near In time*** | | |
| open on same machine at same time | open/close activation events, objects, date time of events | distance across times, overlapping sessions |
| ***Occurring near In "place"*** | | |
| on same machine | machine name | |
| near each other in directory | place in directory structure | min number of jumps through tree from one to the other |
| near each other in web | link event, links from, links to | store metadata in computer system database |
| on the same email | attachment events, objects | aggregate at level of communication |
| ***Being sent*/*received to one another*** | | |
| item sent to another person | sent event, objects | |
| pointer of item sent to another person | insert event, objects | |
| opened by a person | open event, objects | |
| saved by a person | save event, objects | |
| ***Activating one from within the* other** | | |
| items downloaded from a web page | download event, objects | |
| linked via a URL | link event, objects, link from, link to | |

In one implementation, association system 110 could be instructed to ignore certain types of similarity, or to weight one type of similarity more heavily than another. Moreover, the associations or similarities tracked and identified by association system 110 could be extensible.

In addition, objects with which a user interacts can be of a different importance or significance to the user. For instance, a document that a user keeps open and edits of an extended period could be deemed to be of greater importance than a document that is opened for only a brief period of time. Likewise, a photo that is accessed and opened repeatedly could be deemed to be of greater importance that a photo that is only opened once. Table 1C lists exemplary factors by which association system 110, for example, could determine and store in computer system database 106 the relative importance of objects. As indicated, the importance factors may relate to the duration of user interactions, the frequency of interactions, the recency of interactions, as well as the immediacy of user responses, the amount of copying, duplication, and backups, and the extent objects are shared.

**Table 1C -**

| ***Data Collection and Analysis*** | | |
|---|---|---|
| **Constructs** | **Operationalization** | |
| | **Data Collecting** | **Data Processing** |
| **Importance of Objects** | | |
| ***Duration of Interaction*** | | |
| | open and close activation events, object | session times calculated by min max time/date, then summed by object |
| | keyboard events, mouse events, object | summed by object |
| ***Frequency of Interaction*** | | |
| | activation events, date/times | count of unique activations/sessions |
| ***Recency of Interaction*** | | |
| | activation events, date/times | get maximum date |
| ***Immediacy of response to*** | | |
| | | difference in time |
| ***Copying, duplication, backups*** | print, save as, multiple versions | |
| ***Sharing*** | show during meeting, share via email, etc, | |

Relationship processing system 108 may further include a chunking system 112 that uses the degrees of similarity or association determined by similarity or association system 110 for an arbitrarily large set of objects or files and groups or "chunks" them into a specified number of sub-groups. For instance, given 100 photos, chunking system 112 could separate them into any number of sub-groups or chunks based on one or more criteria such as the dates they were taken, or who is in the photos, for example. The criteria to be used by chunking system 112 may be pre-defined or specified by a user, for example, and in one implementation can place the same item into several chunks (e.g., a picture of Bob and Sue would go into a Bob chunk as well as a Sue chunk). Chunking system 112 may be implemented as one or more programs stored on the computer.

A context association user interface system 116 utilizes information stored in computer system database 106 by system activity monitor 104, as well as information determined by similarity or association system 110 and chunking system 112 to display visualizations 118 illustrating context associations between computer system files, computer information, and other information. Visualizations 118 may be based upon the results of database queries 120 to which, in some instances, data filters 122 are applied. In addition, user interface system 116 can provide application and system notifications 1243, as described below in greater detail.

Accordingly, context association system 100 accommodates innate human memory, which works by association so that events are often remembered as happening in relationship to other events. In contrast, conventional computer file systems force users to use and remember arbitrary, out-of-context filing structures. With the significant numbers of computer files and objects that many users interact with, conventional out-of-context filing structures can make it difficult, or impossible, for users to find and access computer information that was worked on or viewed in the past. Context association system 100 allows a user to view and assign searchable metadata and to retrieve documents, objects or files that match selected metadata.

Fig. 2 is a detailed block diagram of one implementation of data collection system 102. In addition to system activity monitor 104 for monitoring user computer activity, for example, data collection system 102 can also include any or all of the following, including an event handler 202 through which one or more applications 204 (including other software services) send metadata information about application events to data collection system 102 and receive metadata information about application events from data collection system 102. Applications 204 may be separate from an underlying operating system for the computer, or may be services or features provided by the operating system.

A data collection container 206 operates to control system activity monitor 104, event handler 202, and any other data collection modules, and particularly controls data collection relating to system activity, copy and paste between documents, incoming and outgoing messages, opening shared files, etc. In addition, data collection container 206 can operate to obtain or receive common data (like weather, news), other than data relating specifically to operation or use of the computer, from one or more separate computer information sources 208 (e.g., public servers).

Applications 204 running on a computer with automatic context association system 100 could register with event handler 202 to receive enhanced document management functionality. In particular, data collection container 206 supports cross-application integration that allows collection of data or information about cross-application events, such as copy and paste between documents, attaching a document to an email message, etc., thereby allowing relationships between objects to be determined or derived by relationship processing system 108. Moreover, applications 204 can interact directly with data collection system 102 to provide contextual information not readily available to system activity monitor 104. For example, if an email attachment is saved to disk as a separate file, the email application 204 may create a link between this file and the original email message (and, by extension, with the message sender). Control system activity monitor 104 and event handler 202 allow data to be collected at high efficiency and at a high granularity level, and with the minimal amount of processing required. In addition, data collection system 102 in one implementation may be extensible to allow for the installation of additional data collectors that may be developed in the future.

In one implementation users are notified that the data is collected and what it is used for. Users are provided one or more controls to selectively enable or disable the data collection, or explicitly adjust the importance of objects and their association weights, as described below. In other implementations, the ways in which the data is collected may be modified automatically based on how the data is used. While data is typically collected at the level of an individual user and computer, it will be appreciated that the data from multiple users and their computers could be combined. For such a shared data implementation, system 100 will provide unique identifiers for the data, objects and sessions, consistent handling of to- and from- fields for communications, replication of event identifiers across computers in shared sessions, privacy, and so forth.

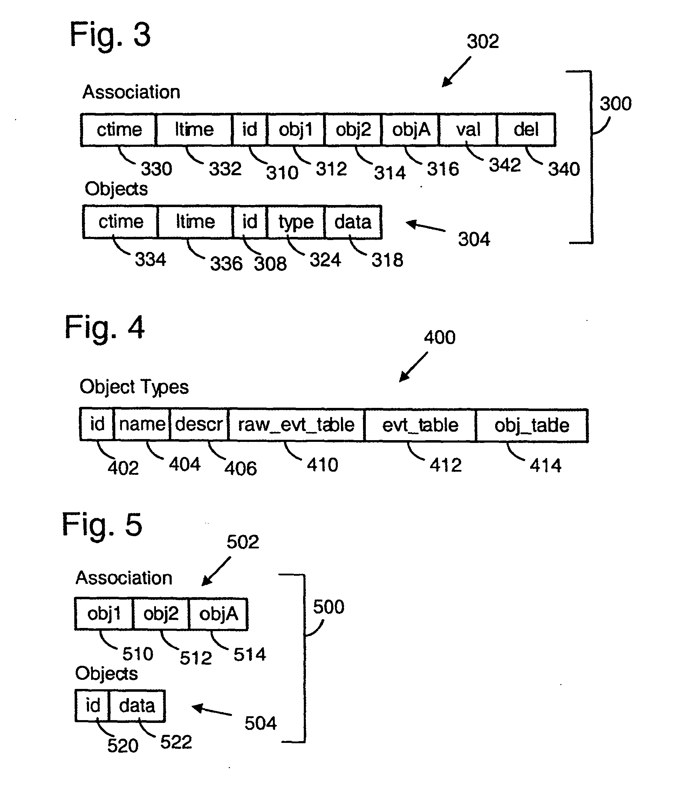

Fig. 3 is a schematic block diagram of an automatic context association schema or data structure 300 in accordance with the present invention. The term schema refers generally to metadata, which is data describing other data. A schema generally defines the various parts and aspects of other data, in this case, the various parts and aspects of data obtained with respect to automatic context associations.

Automatic context association schema 300 has a series of association tables 302 and object tables 304 that are stored in a computer readable medium and include information about user interactions with various computer system objects, including documents, photos, web pages, and interaction with other people, in order to establish meaningful associations therebetween. Such information may be obtained by automatic context association system 100 of Figs. 1 and 2, for example, or by operation of another association system.

Association table 302, sometimes referred to as Assocs table 300, has type-independent entries that support linking of objects of different types. As a result, association table 302 includes a unique association identifier (id) field 310 that identifies an association or relationship between a pair of objects (e.g., document, person, web site, etc.). Each object is represented in an object table 304 by a unique identifier that is stored in an identifier field 308 (id) in object table 304.

Each row in association table 302 associates two objects, obj1 and . obj2, with a third object, called an associating object, objA. The associated objects obj1 and obj2 and the associating object objA are indicated in association table 302 by fields 312, 314, and 316, respectively. The values of entries in obj1 field 312, obj2 field 314, and objA field 316 of association table 302 are the unique identifiers for those respective objects stored in a data field 318 and identified with id field 308 in object table 304.

The fields ctime 330 and itime 332 of association table 302 are the creation time and the last usage time, respectively, of the association represented by association id 310 in that row in association table 302. Similarly, the fields ctime 334 and itime 336 of object table 304 are the creation time and the last usage time, respectively, of the object represented by object id 308 in that row of object table 304. These ctime and Itime values may be used, for example, mainly in evaluations of objects and associations related to time durations and time decay.

The associated objects (obj1, obj2) represented in obj1 field 312 and obj2 field 314 can be of arbitrary type, but instances of each must exist with reference to entries in object table 304 for the specified unique identifiers (IDs). If an object is deleted, then all the associations of this object will be also deleted, such as by an indication in a deletion (del) field 340 that marks the association for later garbage collection. A value field 342 marks as a numeric value the degree or strength of association between the objects.

In particular, all entries in association table 302 are deleted in which the object IDs obj1 and obj2 are equal to the ID of a deleted object. If the associating object identifier indicated in objA field 316 references a deleted object, then the association is not deleted, but the identifier value of objA field 316 is changed to a predefined identifier (ID) of a static NULL object of the same type. In one implementation, there is one instance of a NULL object of each object type. Identifiers of NULL objects are equal to identifiers of object types from an object type table 400 (Fig. 4).

Fig. 4 is a schematic diagram of an objects type table 400 that is optionally included in context association schema 300. Object type table 400 is referenced in the object table 304 in a type field 324 and describes object types. Type field 324 in object table 304, and object type table 400, are optional elements that can provide improved performance of the context association functionality by providing highspeed capture of interactions or events relating to selected objects.

An object type is identified by an identifier field is 402 and has a name field 404 (name), a description field 406 (descr), and three data table names. A raw_evt_table field 410 specifies the name of a raw events table that stores all raw events for this type of object. Raw events are collected events that do not reference any existing object in objects table 304. The raw events table is treated as a temporary table for capturing raw events and deriving from them object events and object instances.

An evt_table field 412 references an event table that contains entries referencing existing objects of this type, as derived from the raw events table. Typically, the object events in the event table describe user interactions with the objects, e.g. creation of the object, opening, saving, printing, deleting, etc. The events in the evt_table can be used to deduct the importance of the object for the user. An obj_table field 414 specifies the name of an object table that contains objects of the specified type, as derived from the raw events table. Examples of objects types that can be included in object type table 306 are indicated in Table 2.

**Table 2 -**

| **Object type table** | | | | | |
|---|---|---|---|---|---|
| **id** | **Name** | **descr** | **raw_evt_table** | **evt_table** | **obj_table** |
| 0 | Type | Represents object type | NULL | NULL | ObjectTypes |
| 1 | Association | Association object used for associating two other objects | NULL | NULL | Assocs |
| 1000 | Person | Representation of a person | NULL | NULL | People |
| 1001 | File | File (local, remove, or on removable media) | FileRawEvents | File Events | Files |
| 1002 | Email | EMail message | EmailRawEvents | EmailEvents | EmailMessages |
| 1003 | Application | Application instance | Application-RawEvents | ApplicationEvents | Applications |
| 1004 | WebPage | Web page | Webpage-RawEvents | WebpageEvents | Webpages |
| 1005 | Folder | Folder (local, remote, or on removable media) | FolderRawEvents | FolderEvents | Folders |
| 1006 | Event | Represents event | NULL | NULL | NULL |
| 1007 | RawEvent | Represents raw event | NULL | NULL | NULL |
| 1008 | GroupType | Represents group type object | NULL | NULL | NULL |
| 1009 | Group | Represents group object | NULL | NULL | NULL |
| 1010 | EmailServer | Represents email server | NULL | NULL | EmailServers |

For example, the File object type represents file objects and includes event tables for events involving user interactions with file objects, such as document files, picture files, spreadsheet files, etc. The Email object type represents email objects and includes event tables for events involving user interactions with email objects, such as email messages, email contacts, etc. The Application object type represents computer application objects and includes event tables for events involving user interactions with computer application objects, such as a word processing application, a spreadsheet application, a browser application, etc. The WebPage object type represents Web page objects and includes event tables for events involving user interactions with Web page objects, namely pages or network sites accessed over the World Wide Web, for example. The Folder object type represents folder objects and includes event tables for events involving user interactions with folder objects, such as the file management folders of an operating system.

The object table of each type (if specified) contains columns that are specific to the object type. For example, email messages will have different data columns than folders. Object tables for each type have an object identifier column that references existing objects in the object table 304.

With reference to Fig. 3, the associating object 316, objA, in associations table 302 is sometimes referred to as an association type if its identifier represents a "static" predefined object, rather than an instance of a dynamically created object. In one implementation, a predefined association set includes association types listed in an association information table (Table 3), wherein the association identifier (associd) in the association information table corresponds to the associating object field 316 (objA) of association table 302 and an object id field 308 of object table 304.

**Table 3 -**

| **Association Information Table** | | |
|---|---|---|
| **associd** | **assocname** | **assocdescr** |
| 2000 | Container | obj1 contains obj2 |
| 2001 | Property | obj2 is a property of obj1 |
| 2002 | Derived | obj1 is derived from obj2 |
| 2003..2009 | Reserved | reserved |
| 2010 | Time co-occurance | obj1 and obj2 co-ocurred in time |
| 2011 | co-location | obj1 and obj2 are co-located |
| 2012 | Application | obj 1 is application for obj2 |
| 2013 | UI switch | there was an UI switch from obj1 to obj2 |
| 2014 | Move | obj2 is a copy of obj1, obj1 was deleted |
| 2015 | Copy | obj2 is a copy of obj1 |
| 2016 | Copy/Paste | there was a copy/paste operation between obj1 and obj2 |
| 2017 | Userassoc | the user specified association between two objects |
| 2018 | Messagefrom | obj1 is sender of email message obj2 |
| 2019 | Messageto | obj1 is recipient of email message obj2 |
| 2020 | Messagecc | obj1 cc recipient of email message obj2 |
| 2021 | Conversation | obj1 is follow up conversation to obj2 |
| 2022..2099 | Reserved | reserved |

The association information table (Table 3) illustrates exemplary associations that can be included in context association schema 300. For example, associations Messagefrom, Messageto, Messagecc, and Conversation represent computer communication relationships regarding email messages or conversations. Associations Move, Copy, and Copy/Paste represent editing relationships between objects. Various other individual associations are described in Table 3.

When a new type of association is created (as opposed to an association instance between objects), an entry in the association information table (Table 3) is added together with an instance of an association object in the object table 304. The object identifier 308 in object table 304 for the added association object is one of the identifiers from a "reserved" space (e.g., associd 2022-2099, Table 3) of association information table (Table 3). Entries in the type field 324 of the object table 304 for the object identifiers from 2000 to 2099 are of type "1," which in the object type table (Table 2) corresponds to object of type "Association."

Fig. 5 is a schematic block diagram of a simplified automatic context association schema 500 in accordance with the present invention. Automatic context association schema 500 has a series of association tables 502 and object tables 504 that are stored in a computer readable medium and include information about user interactions with various computer system objects, including documents, photos, web pages, and interaction with other people, in order to establish meaningful associations therebetween.

Context association schema 500 is simplified in relation to context association schema 300 in that the former includes a basic set of information fields for providing an operable context association schema according to the present invention. Association table 502 includes fields 510 and 512 for associated objects obj1 and obj2 and a field 514 for associating object objA. Object table 504 includes an identifier (id) field 520 and a data field 522. Fields 510, 512, 514, 520, and 522 correspond to and operate in the same manner as the fields in context association schema 300 with the same names.

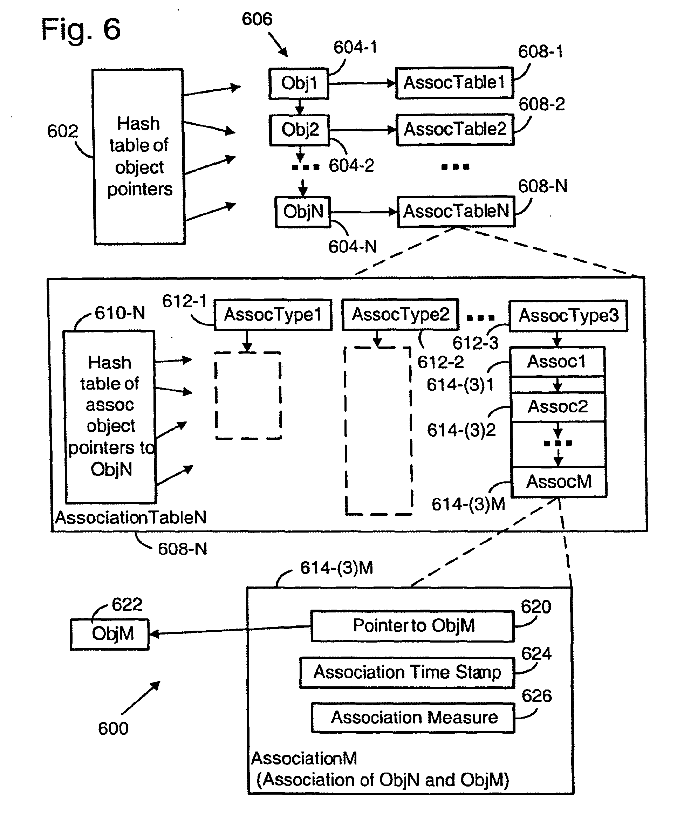

Fig. 6 is a block diagram of an association cache 600 of objects and associations for improving or optimizing the performance of a context association system. A hash table 602 of object pointers provides time-constant access to an arbitrary number of objects 604 (e.g., Obj1, Obj2, ..., ObjN) in an object table 606. Hash table 602 is populated with hash values that are calculated from objects and point to objects 604 (e.g., Obj1, Obj2, ..., ObjN) in an object table 606. For example, the hash values may be calculated from the object identifiers (ids), such as those held in object identifier field 308 of objects table 304.

Each of the objects in the object table 606 points to a corresponding association table 608. As a result, objects 604 (Obj1, Obj2, ..., ObjN) point to respective association tables 606-1, 606-2, ..., 606-N. The collection of association tables 608 represents a sparse matrix of associations between objects.

With reference to its detailed representation, association table 608-N, for example, includes a hash table 610-N that is populated with hash values that point to associations in association table 608-N. The associations are ordered according to association types 612. For example, an unspecified association type 612-N could have associated with it associations 614-(3)1, 614-(3)2, ..., 614-(3)M.

With reference to its detailed representation, association 614-(3)M specifies the association between object ObjN and an object ObjM. Association 614-(3)M includes a pointer 620 to object ObjM 622, a time stamp 624 for the association, and an association measure 626, which represents the strength of the association.

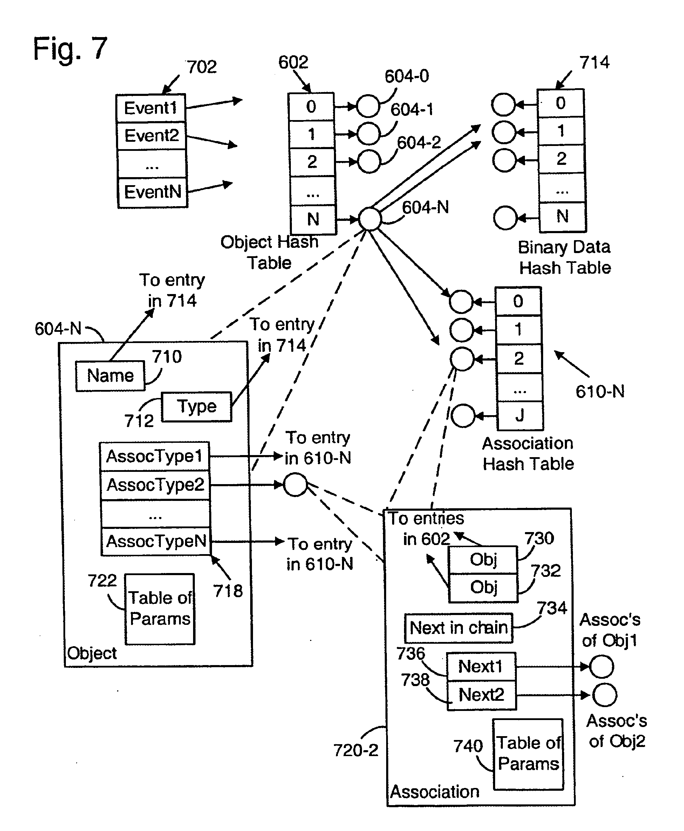

Fig. 7 is block diagram of association cache 600 illustrating its operation in greater detail. As described with reference to Fig. 6, hash table 602 is populated with hash values that point to objects 604-1, 604-2, ..., 604-N. Objects 604 to which hash table 602 points may include objects that are related to events Event1 , Event2, ...., Event N from an event table 702. The events in event table 702 may include a time stamp and an object reference or identifier and may pass through a raw events table, as described above.

With reference to its detailed representation, object 604-N includes a name or identifier 710 and an object type 712 that point to a binary data hash table 714. Likewise, object 604-N includes associations that are ordered by association types 718 and are linked to an association hash table 610-N that points to associations, such as an association 720-2. A parameter table 722 lists values of parameters that are used for ranking the associations and evaluating the "importance'' of object N. For example, frequency of use of object N by the user could be used for strengthening association values with "more important" objects. The types of these parameters and their values can depend on a chosen ranking algorithm.

Association 720-K includes object identifiers 730 and 732 that indicate the associated objects and point to corresponding entries in object hash table 602. A Next in Chain block 734 gives immediate access to a next structure 604-N and is used in enumeration of associations. Next 1, Next 2 blocks 736 and 738 point to "next" association 720 of object 1 and object 2, respectively. A table of parameters 740 lists values of parameters that are used for ranking the associations and evaluating the "importance" of them.

In accordance with the practices of persons skilled in the art of computer programming, the present invention is described above with reference to acts and symbolic representations of operations that are performed by various computer systems and devices. Such acts and operations are sometimes referred to as being computer-executed and may be associated with the operating system or the application program as appropriate. It will be appreciated that the acts and symbolically represented operations include the manipulation by a CPU of electrical signals representing data bits, which causes a resulting transformation or reduction of the electrical signal representation, and the maintenance of data bits at memory locations in a memory system to thereby reconfigure or otherwise alter the computer system operation, as well as other processing of signals. The memory locations where data bits are maintained are physical locations that have particular electrical, magnetic, or optical properties corresponding to the data bits.

Having described and illustrated the principles of our invention with reference to an illustrated embodiment, it will be recognized that the illustrated embodiment can be modified in arrangement and detail without departing from such principles. In view of the many possible embodiments to which the principles of our invention may be applied, it should be recognized that the detailed embodiments are illustrative only and should not be taken as limiting the scope of our invention. Rather, I claim as my invention all such embodiments as may come within the scope and spirit of the following claims and equivalents thereto.

## Claims

1. In context association software in a computer readable medium for forming context associations between first and second software objects that are associated with each other based on user computer interactions, a context association schema, comprising:
first and second object tables for the first and second objects, respectively, each object table including an object identifier field for uniquely identifying the corresponding object and a data field storing data of that object; and
an association table that includes object identifiers for the first and second objects and an associating object that references one of plural association relationships.

2. The schema of claim 1 in which the plural association relationships include one or more computer communication relationships that relate the first and second objects as elements of a computer communication.

3. The schema of claim 1 in which the plural association relationships include one or more editing relationships that relate the first and second objects as elements of an editing operation on a computer.

4. The schema of claim 1 in which the plural association relationships include a container relationship indicating that one of the first and second objects contains the other.

5. The schema of claim 1 in which the plural association relationships include a property relationship indicating that one of the first and second objects is a property of the other.

6. The schema of claim 1 in which the plural association relationships include a derived relationship indicating that one of the first and second objects is derived from the other.

7. The schema of claim 1 in which the plural association relationships include a co-location relationship indicating that the first and second objects are collocated with each other.

8. The schema of claim 1 in which the plural association relationships include an application relationship indicating that one of the first and second objects is an application for the other.

9. The schema of claim 1 in which the plural association relationships include a type relationship indicating that one of the first and second objects is a type specification for the other.

10. The schema of claim 1 further comprising in each object table includes a type field that specifies corresponding object as being one of plural object types.

11. The schema of claim 10 in which the plural object types include a person object type that represents a person.

12. The schema of claim 10 in which the plural object types include a file object type that represents a file.

13. The schema of claim 10 in which the plural object types include an email object type that represents an email.

14. The schema of claim 1 in which the association table includes a creation time field indicating when the association between the first and second objects was created.

15. The schema of claim 1 in which the association table includes a last access time field indicating when the association between the first and second objects was last accessed.

16. In context association software in a computer readable medium for forming context associations between first and second software objects that are associated with each other based on user computer interactions, a context association schema, comprising:
first and second object tables for the first and second objects, respectively, each object table including an object identifier field for uniquely identifying the corresponding object, a data field storing data of that object, and a type field for specifying that object as being one of plural object types;
an association table that includes object identifiers for the first and second objects and an associating object that references one of plural association relationships; and
an object type table that references event tables for one or more object types to facilitate capturing and associating events for objects of the one or more object types.

17. The schema of claim 16 in which the object type table includes for each of selected object types a raw event table into which events regarding the object type are stored prior to object associations being determined.

18. The schema of claim 17 in which the object type table includes for each of the selected object types includes an event table containing entries that reference existing objects of the object type and that are derived from the raw events table.

19. The schema of claim 17 in which the object type table includes for each of the selected object types includes an object table containing entries that reference objects of the object type and that are derived from the raw events table.

20. The schema of claim 17 in which the selected object types include a File object type representing file objects and including event tables for events involving user interactions with file objects.

21. The schema of claim 17 in which the selected object types include an Email object type representing email objects and including event tables for events involving user interactions with email objects.

22. The schema of claim 17 in which the selected object types include an Application object type representing computer application objects and including event tables for events involving user interactions with computer application objects.

23. The schema of claim 17 in which the selected object types include a WebPage object type representing Web page objects and including event tables for events involving user interactions with Web page objects objects.

24. The schema of claim 17 in which the selected object types include a Folder object type representing folder objects and including event tables for events involving user interactions with folder objects.

25. The schema of claim 16 in which the plural association relationships include one or more computer communication relationships that relate the first and second objects as elements of a computer communication.

26. The schema of claim 16 in which the plural association relationships include one or more editing relationships that relate the first and second objects as elements of an editing operation on a computer.

27. The schema of claim 16 in which the plural association relationships include a container relationship indicating that one of the first and second objects contains the other.

28. The schema of claim 16 in which the plural association relationships include a property relationship indicating that one of the first and second objects is a property of the other.

29. The schema of claim 16 in which the plural association relationships include a derived relationship indicating that one of the first and second objects is derived from the other.

30. The schema of claim 16 in which the plural association relationships include a co-location relationship indicating that the first and second objects are collocated with each other.

31. The schema of claim 16 in which the plural association relationships include an application relationship indicating that one of the first and second objects is an application for the other.

32. The schema of claim 16 in which the plural association relationships include a type relationship indicating that one of the first and second objects is a type specification for the other.
